(19) Europäisches Patentamt
European Patent Office
Office européen des brevets

(11) Publication number: 0 115 543 B1

(12) EUROPEAN PATENT SPECIFICATION

(45) Date of publication of patent specification: 08.03.89

(51) Int. Cl.⁴: G 05 B 23/02, G 05 B 19/405

(21) Application number: 83902539.2

(22) Date of filing: 04.08.83

(86) International application number:
PCT/JP83/00253

(87) International publication number:
WO 84/00626 16.02.84 Gazette 84/05

# (54) FUNCTION DIAGNOSIS SYSTEM.

(30) Priority: 05.08.82 JP 136627/82

(43) Date of publication of application:
15.08.84 Bulletin 84/33

(45) Publication of the grant of the patent:
08.03.89 Bulletin 89/10

(84) Designated Contracting States:
DE FR GB

(56) References cited:
EP-A-0 025 181
JP-A-54 095 142
JP-A-54 116 584
JP-A-55 023 551
US-A-3 577 073
US-A-3 820 077
US-A-4 095 094
US-A-4 155 116

(73) Proprietor: FANUC LTD
3580, Shibokusa Aza-Komanba Oshino-mura
Minamitsuru-gun Yamanashi 401-05 (JP)

(72) Inventor: YAMAZAKI, Etuo
566-93, Shimoongata-cho
Hachioji-shi, Tokyo 192-01 (JP)

(74) Representative: Billington, Lawrence Emlyn et al
HASELTINE LAKE & CO Hazlitt House
28 Southampton Buildings Chancery Lane
London WC2A 1AT (GB)

EP 0 115 543 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a device provided with a function diagnosing system for diagnosing functions of the device which operates in accordance with a command program, such as a machine tool or the like.

It is customary in the prior art that when a malfunction occurs in a machine tool or the like which operates in accordance with a command program, a maintenance person tests each part of the device using a measuring instrument to detect and regulate an affected part. Therefore, the prior art method is defective in that much time is consumed for detecting and regulating the malfunctioning part.

US—A—3 820 077 and US—A—3 577 073 disclose devices according to the precharacterising part of claim 1 in which the functional blocks are merely supplied with a high operating voltage to detect those blocks which are weak.

The present invention is an improvement over the prior art and has for its object permitting the detection of a malfunctioning part in a short time and automatic regulation of the affected part.

According to the present invention there is provided a device which is operable by a control unit in accordance with a command program and which comprises a plurality of functional blocks, the control unit being associated with a program memory for said command program, and the device being provided with a function diagnosing system operable in dependence upon a diagnostic instruction inserted in the command program to make a function diagnosis of the device by applying to said functional blocks voltages which will produce predetermined responses when these blocks are functioning correctly, and testing to determine whether or not these predetermined responses are achieved and thus whether or not the blocks are functioning correctly, characterised in that under the control of a diagnostic program said voltages applied to the functional blocks are input signals which will be processed by the blocks to produce predetermined levels of output signals from the blocks when they are functioning correctly, and under the control of the diagnostic program the actual values of these output signals are compared with said predetermined levels, and when the actual and predetermined levels of output signal from a block do not correspond an associated regulation circuit arranged to act on the block is operated in dependence upon the diagnostic program to make the levels correspond, so that in normal operation of the device the block will provide correct output signals in response to its input signals

Brief description of the drawings

Fig. 1 is a block diagram illustrating an embodiment of the present invention; Fig. 2 is a diagram showing, by way of example, the contents of a command tape; Fig. 3 is a block diagram illustrating the arrangement of a regulation circuit; and Fig. 4 is a flowchart showing the contents of processing by the control unit.

Fig. 1 is a block diagram illustrating an embodiment of the present invention including a tracing machine. In Fig. 1, reference character TR indicates a tracer head, and ST a stylus. SW is a changeover switch which, when a control signal a applied thereto via a data output device DO is a "1", provides displacement signals $\varepsilon_x$, $\varepsilon_y$ and $\varepsilon_z$ from the tracer head TR to a displacement calculation circuit DG and an indexing circuit IND. When the control signal a is a "0", the changeover switch SW provides output signals x, y and z of DA converters DA1 to DA3 to the displacement calculation circuit DG and the indexing circuit IND, instead of applying the displacement signals $\varepsilon_x$, $\varepsilon_y$ and $\varepsilon_z$. ADD is an adder, ARN and ART are velocity component calculation circuits, and DC is a distribution circuit, GC is a gate circuit, DX, DY and DZ are servo amplifiers, and MX, MY and MZ are motors. AS is an analog switch, AD an AD converter, DI a data input device, and CPU a control unit. SW1 to SW3 are switches each of which is turned ON when a control signal b applied thereto via the data output device DO is a "1", and is turned OFF when the control signal b is a "0". DIS is a display unit, TRE a tape reader, and KB a keyboard. M1 is a data memory in which are stored data such as two-way tracing, one-way tracing, contour tracing and other tracing modes, a tracing direction, a tracing speed, a pick feed value and so forth. M2 is a program memory in which are stored a control program and a diagnostic program, and S1 to S4 are regulation circuits which respond to control signals h to k applied thereto via the data output device DO to regulate the levels of the output signals ε and d to g of the displacement calculation circuit DG, the velocity component calculation circuits ARN and ART, and the distribution circuit DC.

The stylus ST is brought into contact with a model (not shown) and is fed by the motors, and the displacement signals $\varepsilon_x$, $\varepsilon_y$ and $\varepsilon_z$ corresponding to the displacement of the stylus ST are provided from the tracer head TR. Based on the displacement signals $\varepsilon_x$, $\varepsilon_y$ and $\varepsilon_z$ applied thereto via the changeover switch SW, the displacement calculation circuit DG produces a composite displacement signal

$$\varepsilon=\sqrt{\varepsilon_x^2+\varepsilon_y^2+\varepsilon_z^2},$$

and the indexing circuit IND produces displacement-direction signals sin θ and cos θ. The composite displacement signal ε is provided to the adder ADD to obtain the difference between it and a reference displacement signal $\varepsilon_0$. In the velocity component calculation circuits ARN and ART, a normal-direction velocity signal d and a tangential-direction velocity signal e are obtained; and in the distribution circuit DC, command velocity signals f and g are produced on the basis of the displacement-direction signals sin θ and cos θ, the normal-direction velocity signal d and the tangential-direction velocity signal e. The command velocity signals are provided to that one of the servo amplifiers which is selected by the gate circuit GC, bodily feeding the stylus and a cutter (not shown). Since these operations are well-known in the tracer control technology, no more detailed description will be given.

Fig. 2 is a diagram showing, by way of example, the contents of a command tape PT for use in carrying the invention into practice, (A) indicating a command program which instructs roughing, (B) a diagnostic instruction for starting the diagnostic program stored in the program memory M2 and (C) a command program which instructs finishing. Fig. 4 is a flowchart showing the contents of processing by the control unit.

The control unit CPU reads the part (A) of the command tape PT, by the tape reader TRE (step S1), and when deciding that the instruction thus read out is not an end instruction (step S2) nor is it a diagnostic instruction (step S3), stores in the data memory M1 data (a reference displacement value, a pick feed value, a pick feed direction, a pick feed speed, etc.) stored in the readout part (step S4), and then performs tracer control (roughing) in accordance with the data stored in the data memory M1 and a control program stored in the program memory M2 (step S5). When judging that the roughing has come to an end (step S6), the control unit CPU reads the part (B) of the command tape PT, by the tape reader TRE (step S1), and when judging that the instruction read out is the diagnostic instruction (step S3), reads the diagnostic program stored in the program memory M2 (step S7), and then diagnoses the function of each part of the device in accordance with the diagnostic program.

The function of each part of the device is diagnosed, for example, in such a manner as follows: The control unit CPU first makes the control signal a applied via the data output device DO to the changeover switch SW a "0" (step S8), then makes the control signal b applied to each of the switches SW1 to SW3 a "0" (step S9) and then provides predetermined data via the data output device DO to the DA converters DA1 to DA3 (step S10). The changeover switch SW is one that, while the control signal a is a "0", provides the output signals x, y and z from the DA converters DA1 to DA3 to the displacement calculation circuit DG and the indexing circuit IND, instead of applying the displacement signals $\varepsilon_x$, $\varepsilon_y$ and $\varepsilon_z$, as referred to previously. Each part of the device therefore performs an operation based on the output signals x, y and z of the DA convertors DA1 to DA3, and the output signal $\varepsilon$ of the displacement calculation circuit DG, the output signals d and e of the velocity component calculation circuits ARN and ART, and the output signals f and g of the distribution circuit DC, are provided to the analog switch AS. Furthermore, since the switches SW1 to SW3 are each turned OFF while the control signal b is a "0", as mentioned previously, the motors MX, MY and MZ are out of operation in this period.

Next, the control unit CPU provides a control signal c via the data output device DO to the analog switch AS (step S11), thus applying the signals $\varepsilon$ and d to g outputted from the associated parts of the device via the AD converter AD to the data input device DI in a sequential order. The control unit CPU judges whether the levels of the signals $\varepsilon$ and d to g sequentially applied via the data input device DI are predetermined levels or not (step S12).

When it is judged that the levels of the signals, for instance, f and g among the signals $\varepsilon$ and d to g are not the predetermined levels, the control unit CPU decides that a failure has occurred in the distribution circuit DC, and provides a display to that effect on the display unit DIS (step S13). At the same time it provides a control signal k via the data output device DO to the regulation circuit S4 of such an arrangement as shown in Fig. 3. In Fig. 3, reference character SC indicates a contact control circuit which responds to the control signal k to effect ON-OFF control of contacts r1 to r4, and therefore R1 to R4 resistors weighted, for example, 1, 2, 4 and 8, respectively. Incidentally, the regulation circuits S1 to S3 are also of the same construction as mentioned above. The abovesaid operation will be described in more detail. When the control unit CPU judges that the signals f and g are not of predetermined levels, the control unit CPU applies the control signal k to the contact control circuit SC in the regulation circuit S4 (step S14), switching the states of the contacts r1 to r4 in a sequential order. When the differences between the levels of the signals f and g and the predetermined levels have come into a permissible range, the control unit CPU instructs the contact control circuit SC to hold the states of the contacts r1 to r4 at that time (step S16), then makes each of the control signals a and b a "1" (step S17) and then reads the part (C) of the command tape PT (step S1). When judging that this part is not the end instruction (step S2) nor is it the diagnostic instruction (step S3), the control unit CPU stores the data of the part (C) in the data memory M1 (step S4) and performs tracer control (finishing) in accordance with the data stored in the data memory M1 and the control program stored in the program memory M2 (step S5). In the case where the levels of the signals f and g cannot be made as predetermined in spite of switching of the resistors R1 to R4 in the regulation circuit S4, the control unit CPU provides a display to that effect on the display unit DIS. As the troubles that can be corrected by switching the resistors R1 to R4 in the regulation circuit S4, there are for example abnormalities in output levels which result from variations in the power supply voltage and ambient temperature.

Moreover, when judging that the levels of the signals $\varepsilon$ and d to g are all as predetermined (step S12), the control unit CPU first makes each of the control signals a and b a "1" (step S17) and then reads the part (C) of the command tape, by the tape reader TRE (step S1), performing tracer control (finishing) in the same manner as described previously.

While in the embodiment the diagnostic instruction is inserted between the command program for roughing and the command program for finishing, it is a matter of course that the diagnostic instruction may also be inserted at a desired position without being limited specifically to the abovesaid position.

As has been described in the foregoing, according to the present invention, a device is divided into a plurality of blocks, regulating means (regulation circuits S1 to S4 in the embodiment) for regulating the levels of output signals of the respective blocks are provided corresponding thereto, and when diagnosing the functions of the device, the regulating means are controlled so that the output signals of the respective blocks may become of predetermined levels; accordingly, the invention possesses the advantage of permitting easy regulation of each part of the device.

**Claims**

1. A device which is operable by a control unit (CPU) in accordance with a command program and which comprises a plurality of functional blocks (eg. DG, ARN, ART, DC), the control unit (CPU) being associated with a program memory (M2) for said command program, and the device being provided with a function diagnosing system operable in dependance upon a diagnostic instruction inserted in the command program to make a function diagnosis of the device by applying to said functional blocks (e.g. DG, ARN, ART, DC) voltages which will produce predetermined responses when these blocks are functioning correctly, and testing to determine whether or not these predetermined responses are achieved and thus whether or not the blocks are functioning correctly, characterised in that under the control of a diagnostic program said voltages applied to the functional blocks (e.g. DG, ARN, ART, DC) are input signals which will be processed by the blocks to produce predetermined levels of output signals from the blocks when they are functioning correctly, and under the control of the diagnostic program the actual values of these output signals are compared with said predetermined levels, and when the actual and predetermined levels of output signals from a block (eg. DG, ARN, ART, DC) do not correspond an associated regulation circuit (e.g. S1, S2, S3, S4) arranged to act on the block is operated in dependence upon the diagnostic program to make the levels correspond, so that in normal operation of the device the block will provide correct output signals in response to its input signals.

2. A device according to claim 1, comprising a changeover switch (SW) operable in response to a diagnostic instruction to substitute said voltages which will produce predetermined responses, for voltages supplied to the functional blocks (e.g. DG, ARN, ART, DC) when the device is operating normally.

3. A device according to claim 1 or 2, wherein the output of the device as a whole can be rendered inoperative during a diagnostic operation.

4. A device according to any preceding claim, wherein the or each regulation circuit (e.g. S1, S2, S3, S4) comprises a plurality of resistors (R1 to R4) which are switchable by the control unit (CPU) to make the actual and predetermined levels of output signal from the associated functional block correspond.

5. A device according to claim 4, wherein in each regulation circuit (e.g. S1, S2, S3, S4) the resistors (R1 to R4) are weighted to affect the output signal from the associated functional block.

6. A device according to any preceding claim, which comprises a machine tool in which the functional blocks (e.g. DG, ARN, ART, DC) are for processing signals involved in driving a movable member of the machine tool.

7. A device according to claim 6, wherein the machine tool is a tracing machine in which a tracer head (TR) produces displacement signals ($\varepsilon_x$, $\varepsilon_y$, $\varepsilon_z$) when the device is in use, which displacement signals are fed directly to a specific functional block (DG) which itself produces output signals for subsequent functional blocks (ARN, ART, DC), and wherein during a function diagnosis said displacement signals ($\varepsilon_x$, $\varepsilon_y$, $\varepsilon_z$) are replaced by predetermined levels of test signals (x, y, z) which, after processing by the specific function block (DG), are fed-through to provide test signals for the subsequent functional blocks (ARN, ART, DC).

**Patentansprüche**

1. Vorrichtung, die durch eine Steuereinheit (CPU) entsprechend einem Befehlsprogramm betreibbar ist und eine Vielzahl von Funktions-Blöcken (z.B. DG, ARN, ART, DC) umfaßt, wobei der Steuereinheit (CPU) ein Programmspeicher (M2) für das Befehlsprogramm zugeordnet ist und die Vorrichtung mit einem Funktionsdiagnosesystem versehen ist, das in Abhängigkeit von einem Diagnosebefehl betriebsfähig ist, der in das Befehlsprogramm eingefügt ist, um eine Funktionsdiagnose der Vorrichtung durch Anlegen von Spannungen an die Funktions-Blöcke (z.B. DG, ARN, ART, DC) durchzuführen, was vorbestimmte Antwortsignale erzeugt, wenn diese Blöcke korrekt funktionieren, und um zu prüfen, ob diese vorbestimmten Antwortsignale erzielt oder nicht erzielt werden, und somit, ob die Blöcke korrekt oder nicht korrekt funktionieren, dadurch gekennzeichnet, daß während der Steuerung durch ein Diagnoseprogramm die Spannungen, die an die Funktions-Blöcke (z.B. DG, ARN, ART, DC) gelegt werden, Eingangssignale sind, die durch die Blöcke verarbeitet werden, um vorbestimmte Pegel von Ausgangssignalen der Blöcke zu erzeugen, wenn diese korrekt funktionieren, und während der Steuerung durch das Diagnoseprogramm die tatsächlichen Werte dieser Ausgangssignale mit den vorbestimmten Pegeln verglichen werden, und wenn die tatsächlichen und die vorbestimmten Pegel der Ausgangssignale eines Blocks (z.B. DG, ARN, ART, DC) nicht einander entsprechen, eine diesem zugeordnete Regelschaltung (z.B. S1, S2, S3, S4), die vorgesehen ist, um auf den Block einzuwirken, in Abhängigkeit von dem Diganoseprogramm betätigt wird, um die Pegel so einzustellen, daß sie einander entsprechen, so daß der Block im Normalbetrieb der Vorrichtung korrekte Ausgangssignale in Reaktion auf dessen Eingangssignale erzeugt.

2. Vorrichtung nach Anspruch 1, mit einem Umschalter (SW), der in Reaktion auf einen Diagnosebefehl betätigbar ist, um die Spannungen, die vorbestimmte Antwortsignale erzeugen werden, durch Spannungen zu ersetzen, die an die Funktions-Blöcke (z.B. DG, ARN, ART, DC) gelegt sind, wenn die Vorrichtung normal arbeitet.

3. Vorrichtung nach Anspruch 1 oder 2, bei der der Ausgang der Vorrichtung als Ganzes während eines Diagnosebetriebs unwirksam gemacht werden kann.

4. Vorrichtung nach einem der vorhergehenden Ansprüche, bei der die oder jede Regelschaltung (z.B. S1, S2, S3, S4) eine Vielzahl von Widerständen (R1 bis R4) umfaßt, die durch die Steuereinheit (CPU) schaltbar sind, um die tatsächlichen und die vorbestimmten Pegel des Ausgangssignals des zugeordneten Funktions-Blocks einander entsprechen zu lassen.

5. Vorrichtung nach Anspruch 4, bei der die Widerstände (R1 bis R4) in jeder Regelschaltung (z.B. S1, S2, S3, S4) gewichtet sind, um das Ausgangssignal des zugeordneten Funktions-Blocks zu beeinflussen.

6. Vorrichtung nach einem der vorhergehenden Ansprüche, die ein Bearbeitungswerkzeug enthält, wobei die Funktions-Blöcke (z.B. DG, ARN, ART, DC) zum Verarbeiten von Signalen bestimmt sind, die für das Treiben eines beweglichen Teils des Bearbeitungswerkzeugs in Frage kommen.

7. Vorrichtung nach Anspruch 6, bei der das Bearbeitungswerkzeug eine Abtastvorrichtung ist, in der ein Abtastkopf (TR) Versetzungssignale ($\varepsilon_x$, $\varepsilon_y$, $\varepsilon_z$) erzeugt, wenn die Vorrichtung in Betrieb ist, welche Versetzungssignale direkt einem bestimmten Funktions-Block (DG) eingegeben werden, der seinerseits Ausgangssignale für nachfolgende Funktions-Blöcke (ARN, ART, DC) erzeugt, und bei der während einer Funktionsdiagnose die Versetzungssignale ($\varepsilon_x$, $\varepsilon_y$, $\varepsilon_z$) durch Prüfsignale (x, y, z) mit vorbestimmten Pegeln ersetzt werden, die nach Verarbeiten durch den bestimmten Funktions-Block (DG) durchgeschaltet werden, um Prüfsignale für die nachfolgenden Blöcke (ARN, ART, DC) bereitzustellen.

**Revendications**

1. Un dispositif qui peut fonctionner sous la dépendance d'une unité de commande (CPU) conformément à un programme de commande, et qui comprend un ensemble de blocs fonctionnels (par exemple DG, ARN, ART, DC), l'unité de commande (CPU) étant associée à une mémoire de programme (M2) pour le programme de commande, et le dispositif comportant un système de diagnostic de fonctionnement qui peut être mis en oeuvre sous la dépendance d'une instruction de diagnostic qui est insérée dans le programme de commande pour effectuer un diagnostic de fonctionnement du dispositif par l'application aux blocs fonctionnels (par exemple DG, ARN, ART, DC) de tensions qui produisent des réponses prédéterminées lorsque ces blocs fonctionnent correctement, et par l'accomplissement d'un test pour déterminer si ces réponses prédéterminées sont obtenues ou non, et si les blocs fonctionnent correctement ou non, caractérisé en ce que les tensions qui sont appliquées aux blocs fonctionnels (par exemple DG, ARN, ART, DC) sous la commande d'un programme de diagnostic, sont des signaux d'entrée qui sont traités par les blocs de façon à produire des niveaux prédéterminés de signaux de sortie des blocs lorsque ces derniers fonctionnent correctement, et les valeurs réelles de ces signaux de sortie sont comparées avec les niveaux prédéterminés, sous la commande du programme de diagnostic, et lorsque les niveaux réels et prédéterminés des signaux de sortie d'un bloc (par exemple DG, ARN, ART, DC) ne correspondent pas, un circuit de réglage associé (par exemple S1, S2, S3, S4) qui est conçu pour agir sur le bloc, est actionné sous la dépendance du programme de diagnostic pour faire correspondre les niveaux de façon que dans le fonctionnement normal du dispositif, le bloc fournisse des signaux de sortie corrects en réponse à ses signaux d'entrée.

2. Un dispositif selon la revendication 1, comprenant un commutateur (SW) qui peut être actionné sous l'effet d'une instruction de diagnostic pour remplacer les tensions produisant des réponses prédéterminées par des tensions qui sont appliquées aux blocs fonctionnels (par exemple DG, ARN, ART, DC) lorsque le dispositif fonctionne normalement.

3. Un dispositif selon la revendication 1 ou 2, dans lequel la sortie du dispositif, considéré globalement, peut être mise hors fonction pendant une opération de diagnostic.

4. Un dispositif selon l'une quelconque des revendications précédentes, dans lequel le circuit de réglage ou chaque circuit de réglage (par exemple S1, S2, S3, S4) comprend un ensemble de résistances (R1 à R4) que l'unité de commande (CPU) peut commuter pour faire correspondre les niveaux réel et prédéterminé du signal de sortie provenant du bloc fonctionnel associé.

5. Un dispositif selon la revendication 4, dans lequel dans chaque circuit de réglage (par exemple S1, S2, S3, S4), les résistances (R1 à R4) sont pondérées de façon à agir sur le signal de sortie provenant du bloc fonctionnel associé.

6. Un dispositif selon l'une quelconque des revendications précédentes, qui comprend une machine-outil dans laquelle les blocs fonctionnels (par exemple DG, ARN, ART, DC) sont destinés à traiter des signaux qui interviennent dans le déplacement d'un organe mobile de la machine-outil.

7. Un dispositif selon la revendication 6, dans lequel la machine-outil est une machine de copiage dans laquelle un palpeur (TR) produit des signaux de déplacement ($\varepsilon_x$, $\varepsilon_y$, $\varepsilon_z$) lorsque le dispositif est en cours d'utilisation, ces signaux de déplacement étant directement appliqués à un bloc fonctionnel spécifique (DG) qui produit lui-mêmes des signaux de sortie pour des blocs fonctionnels suivants (ARN, ART, DC), et dans lequel, pendant un diagnostic de fonctionnement, ces signaux de déplacement ($\varepsilon_x$, $\varepsilon_y$, $\varepsilon_z$) sont remplacés par des niveaux prédéterminés de signaux de test (x, y, z) qui, après traitement par le bloc fonctionnel spécifique (DG), sont transmis de façon à fournir des signaux de test pour les blocs fonctionnels suivants (ARN, ART, DC).

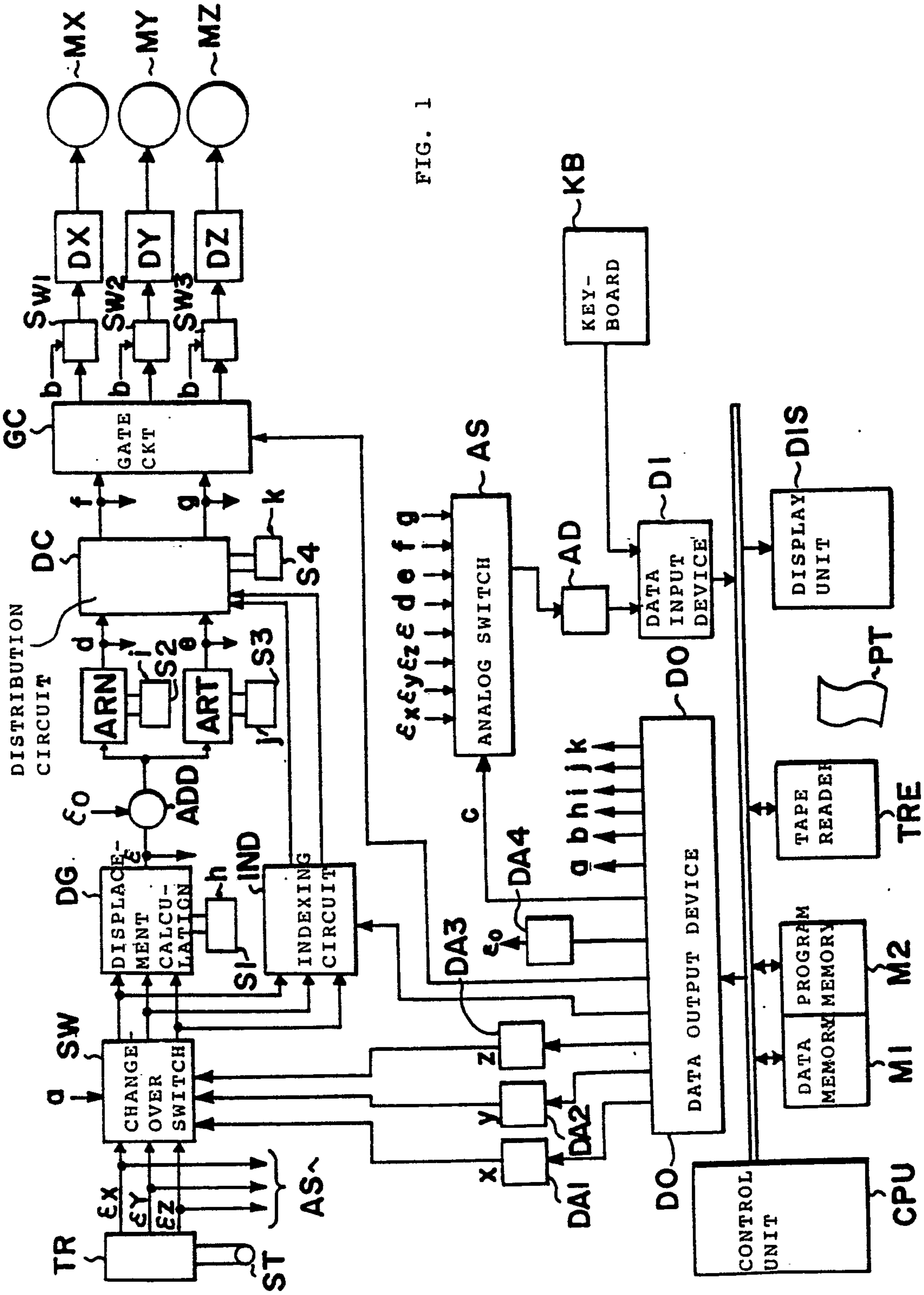
MX
MY
MZ
DX
DY
DZ
SW1
SW2
SW3
b
b
b
GC
GATE CKT
DC
DISTRIBUTION CIRCUIT
f
g
k
S4
d
e
i
S2
S3
j
ARN
ART
ε0
ADD
DG
DISPLACEMENT CALCULATION
ε
h
S1
IND
INDEXING CIRCUIT
SW
CHANGE OVER SWITCH
a
TR
ST
εX
εY
εZ
AS
x
y
z
DA1
DA2
DA3
DA4
ε0
c
εx εy εz ε d e f g
ANALOG SWITCH
AS
AD
DATA INPUT DEVICE
DI
KEY-BOARD
KB
DISPLAY UNIT
DIS
PT
a b h i j k
DATA OUTPUT DEVICE
DO
DO
TAPE READER
TRE
PROGRAM MEMORY
M2
DATA MEMORY
M1
CONTROL UNIT
CPU

FIG. 1

FIG. 2

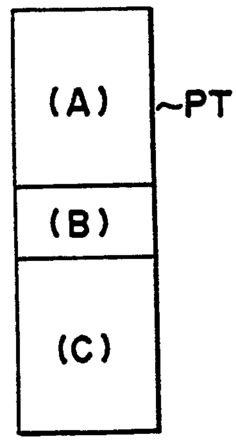
(A)
~PT
(B)
(C)

FIG. 3

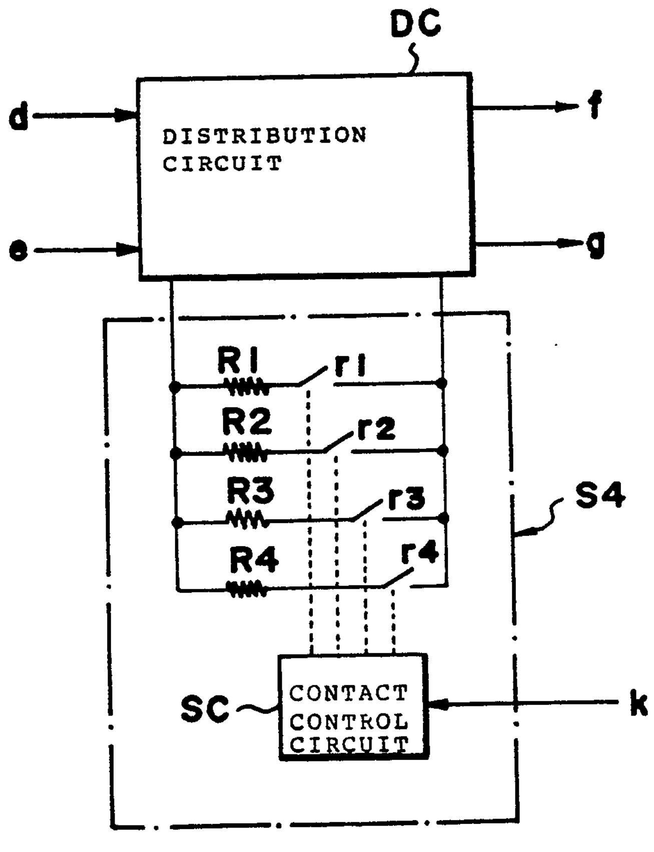
DC
d
e
f
g
DISTRIBUTION
CIRCUIT
R1
r1
R2
r2
R3
r3
R4
r4
S4
SC
CONTACT
CONTROL
CIRCUIT
k

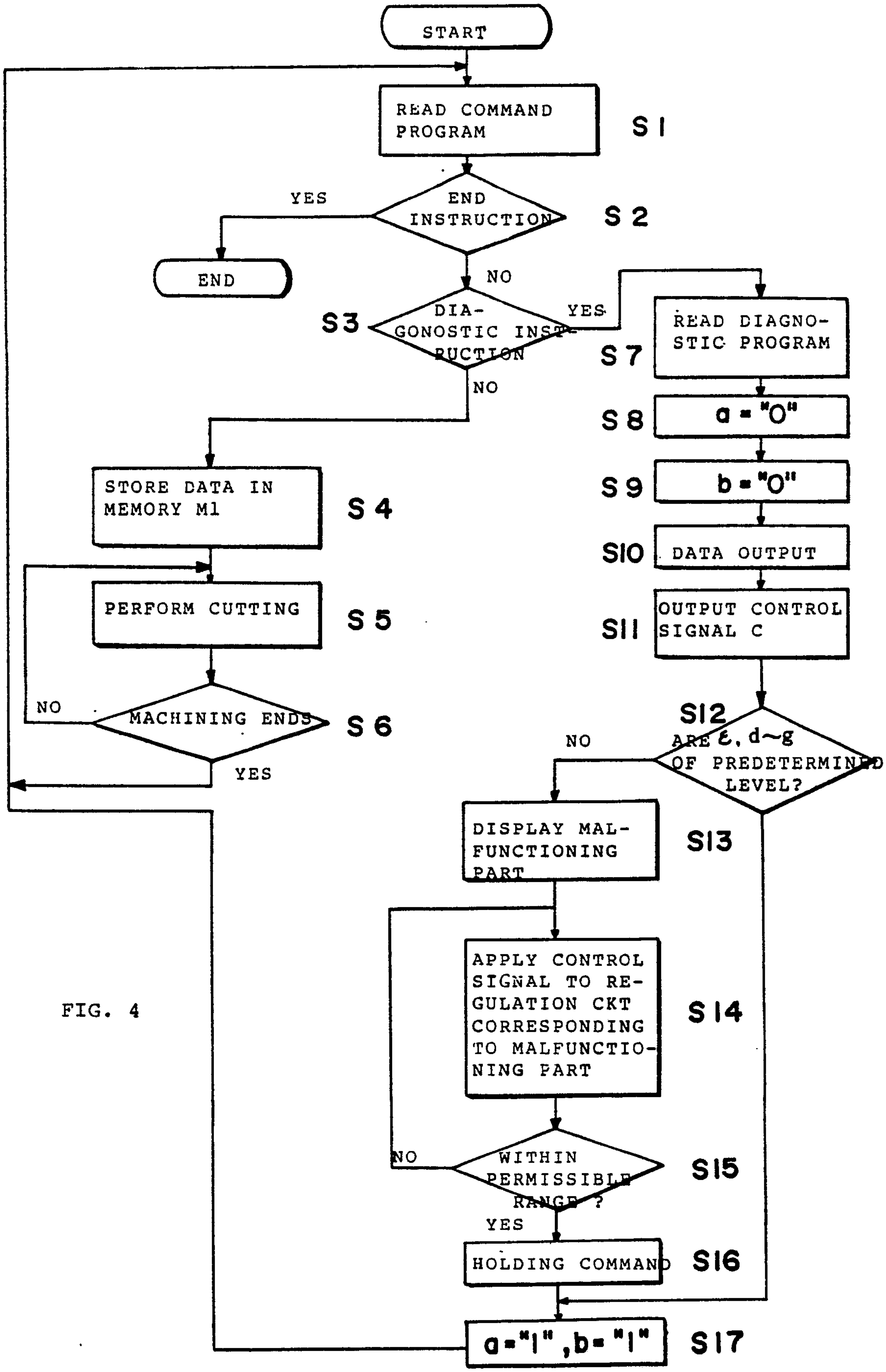
START
READ COMMAND PROGRAM
S1
END INSTRUCTION
S2
YES
END
NO
DIA-GONOSTIC INSTRUCTION
S3
YES
NO
READ DIAGNO-STIC PROGRAM
S7
a = "0"
S8
b = "0"
S9
DATA OUTPUT
S10
OUTPUT CONTROL SIGNAL C
S11
STORE DATA IN MEMORY M1
S4
PERFORM CUTTING
S5
NO
MACHINING ENDS
S6
YES
S12
ARE ε, d~g OF PREDETERMINED LEVEL?
NO
DISPLAY MAL-FUNCTIONING PART
S13
APPLY CONTROL SIGNAL TO RE-GULATION CKT CORRESPONDING TO MALFUNCTIO-NING PART
S14
NO
WITHIN PERMISSIBLE RANGE ?
S15
YES
HOLDING COMMAND
S16
a="1",b="1"
S17

FIG. 4